# EUROPEAN PATENT SPECIFICATION

(11) **EP 0 280 199 B1**
(45) Date of publication and mention of the grant of the patent: **09.08.1995**
(21) Application number: 88102391.5
(22) Date of filing: 18.02.1988
(51) Int. Cl.: A01D 34/68

(54) **Vertical engine for walk behind lawn mower**
Vertikaler Motor für einen Rasenmäher
Moteur vertical pour tondeuse à gazon

(30) Priority: 27.02.1987 JP 45437/87; 27.02.1987 JP 45438/87
(43) Date of publication of application: 31.08.1988
(73) Proprietor: Yamaha Motor Co., Ltd., Iwata 438 (JP)
(72) Inventor: Oguri, Kiyohiko, Iwata-shi Shizuoka-ken (JP); Isaka, Yoshiharu, Iwata-shi Shizuoka-ken (JP)
(74) Representative: Grünecker, Kinkeldey, Stockmair & Schwanhäusser Anwaltssozietät

(56) References cited:
- GB-A- 2 162 036
- US-A- 3 056 249
- US-A- 4 570 584

## Description

### BACKGROUND OF THE INVENTION

This invention relates to a vertical engine for a walk behind type of lawn mower and more particularly to an improved cooling arrangement for such an engine and also to a component layout for the engine that facilitates manipulation of the mower.

The rotary type lawn mower is a very popular type of mower. With such mowers, there is provided a cutting blade that is contained within the mower outer housing and which rotates about a generally vertically extending axis. The cut grass is discharged through a discharge chute formed in the mower housing. The rotary blade is driven by an internal combustion engine that is supported upon the mower housing and which has its output shaft also rotating about a vertically extending axis and coupled to the cutter blade for driving the cutter blade.

With this type of mower, it is the normal practice to provide an air cooling system for the engine. Although this type of mower has considerable advantages, there are certain difficulties in designing a mower that will be completely satisfactory. For example, in order to provide effective air cooling for the engine, the engine is normally provided with some form of cooling shroud and a cooling fan is driven by the engine output shaft for circulating air through the cooling shroud and across the components of the engine to be cooled. However, the air flow through the cooling shroud can easily become obstructed if grass clippings, which tend to swirl around the mower housing, are drawn into the cooling shroud. The accumulation of grass clippings within the cooling shroud will obviously, adversely effect the cooling efficiency and can give rise to difficulties.

A lawn mower in compliance with the preamble of claim 1 is known from US-A-3 056 249. This document discloses a silencing system for a rotary lawn mower. It is proposed, to use an internal combustion engine which is resiliently mounted to a housing of a mower. It order to prevent the entry of dirt and other foreign matters into the enclosure on which the internal combustion engine operates, it is suggested to use an inlet opening in a front corner of the mower housing. The air inlet is below the fan wheel and is closed by a horizontally arranged screen. The grass is discharged by an opening, which is provided in a side wall of the housing.

GB-A-2 162 036 shows a power lawn mower, having a horizontally moving cutter blade. The engine is arranged with a vertical crankshaft and rearwardly mounted cylinder in such a way, that its centre of gravity is disposed rearwardly of the cutting blade axis.

It is the object of the present invention to provide a lawn mower, having an improved and simplified cooling arrangement, wherein the ingestion of grass clippings into the cowling shroud is avoided.

The object is solved according the invention by the subject matter of claim 1.

Preferred embodiments of the invention are subject matter of the subclaims.

### BRIEF DESCRIPTION OF THE DRAWINGS

Figure 1 is a top plan view of a rotary walk behind lawn mower constructed in accordance with an embodiment of the invention.

Figure 2 is an enlarged side elevational view, with a portion broken away and other portions removed.

Figure 3 is a further enlarged cross-sectional view showing the construction of the engine and the outer cowling arrangement.

Figure 4 is a cross-sectional view taken along the line 4-4 of Figure 2.

Figure 5, is a partial top plan view of the engine with a portion broken away and other portions shown in phantom.

Figure 6 is a cross-sectional view taken along the line 6-6 of Figure 5.

Figure 7 is an enlarged cross-sectional view taken generally along the line 7-7 of Figure 1.

Figure 8 is a partial cross-sectional view, in part similar to Figure 3, showing another embodiment of the invention.

Figure 9 is a partial cross-sectional view, in part similar to Figures 3 and 8, showing a further embodiment of the invention.

### DETAILED DESCRIPTION OF THE PREFERRED EMBODIMENTS OF THE INVENTION

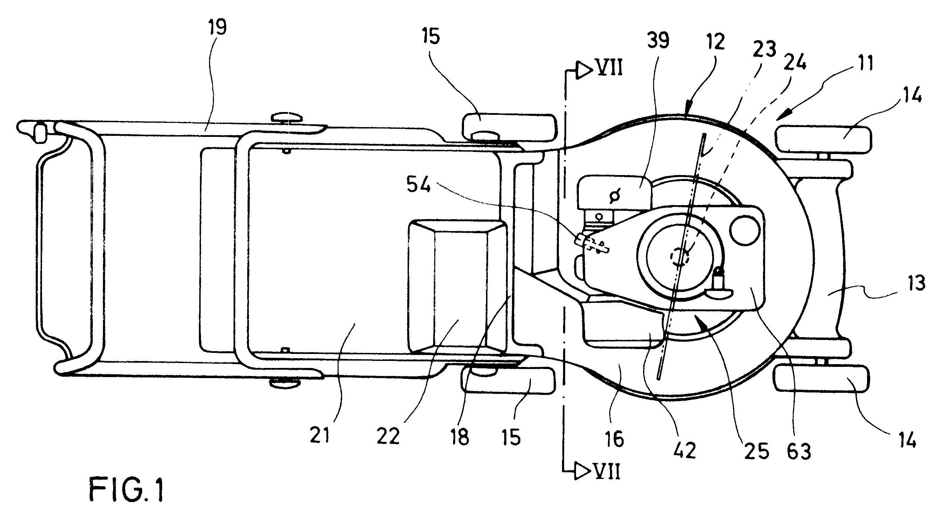

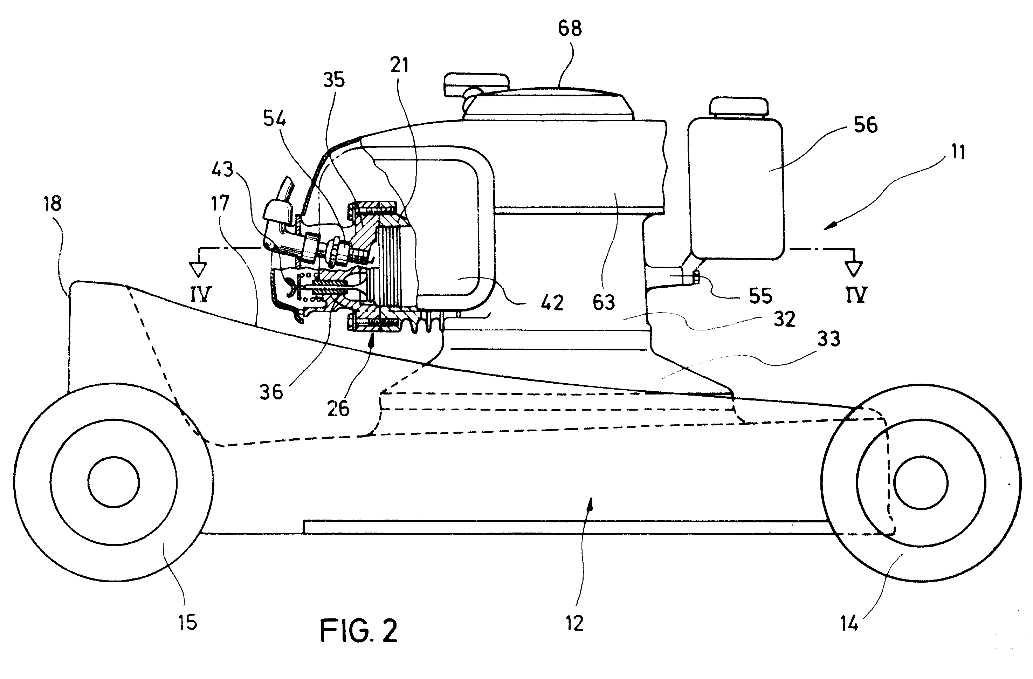

Referring first to Figures 1 and 2, a rotary type lawn mower constructed in accordance with an embodiment of the invention is identified generally by the reference numeral 11. The mower 11 is comprised of a main housing portion, indicated generally by the reference numeral 12 having a forwardly extending part 13 upon which a pair of front wheels 14 are journaled. As is well known in this art, the connection between the front wheels 14 and the mower housing 12 is such that a height adjustment may be made. The mower housing 12 further supports a pair of rear wheels 15 which, like the front wheels 14, are connected to the mower housing 12 by an arrangement to afford a height adjustment. The rear wheels 15 are more widely spaced apart than the front wheels 14.

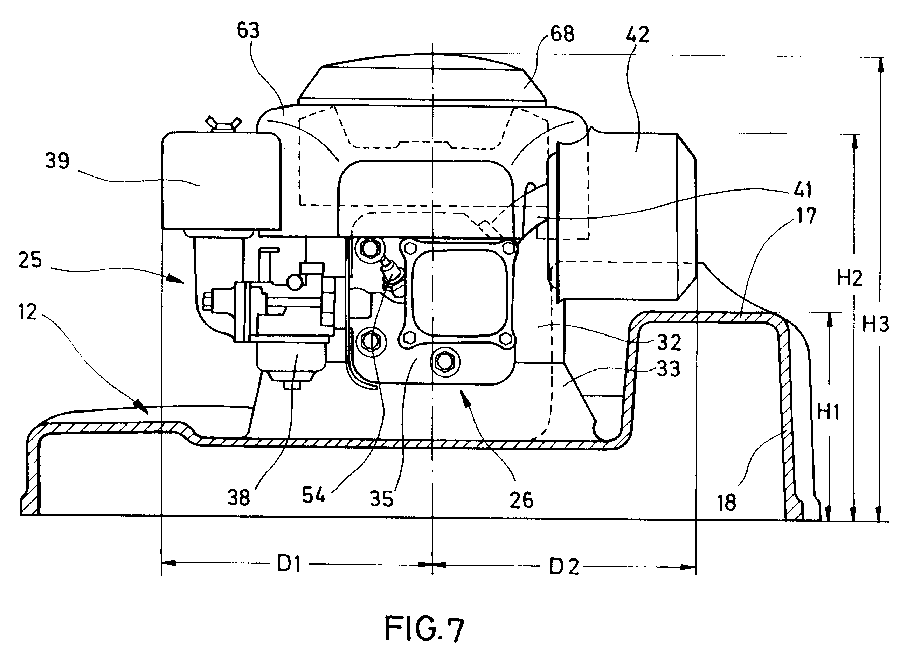

The mower housing 12 is provided with a central portion 16 that defines a generally downardly opening cavity (Figure 7) that has a generally scroll shape. A rearwardly opening discharge chute is defined by an upwardly extending portion 17 of the housing central portion 16 with the discharge opening being identified by the reference numeral 18. As may be best seen in Figures 2 and 7, the discharge opening 18 extends rearwardly and is juxtaposed to one of the rear wheels 15.

A handle assembly 19 is pivotally connected to the mower housing 12 in an appropriate manner and is adapted to support a catcher 21 which may be of any suitable configuration and which has an inlet portion 22 that registers with the discharge chute 18 so that grass clippings cut by the mower will be thrown rearwardly into the catcher 21.

A rotary cutter blade 23 is journaled within the cavity of the main housing 12 for rotation about a generally vertically extending axis by means including a shaft 24. An internal combustion engine, indicated generally by the reference numeral 25 is supported on the upper side of the mower housing 12 and has its output shaft coupled to the mower shaft 24 for driving the cutter blade 23. Specifically, the cutter blade 23 may be directly affixed to the engine output shaft.

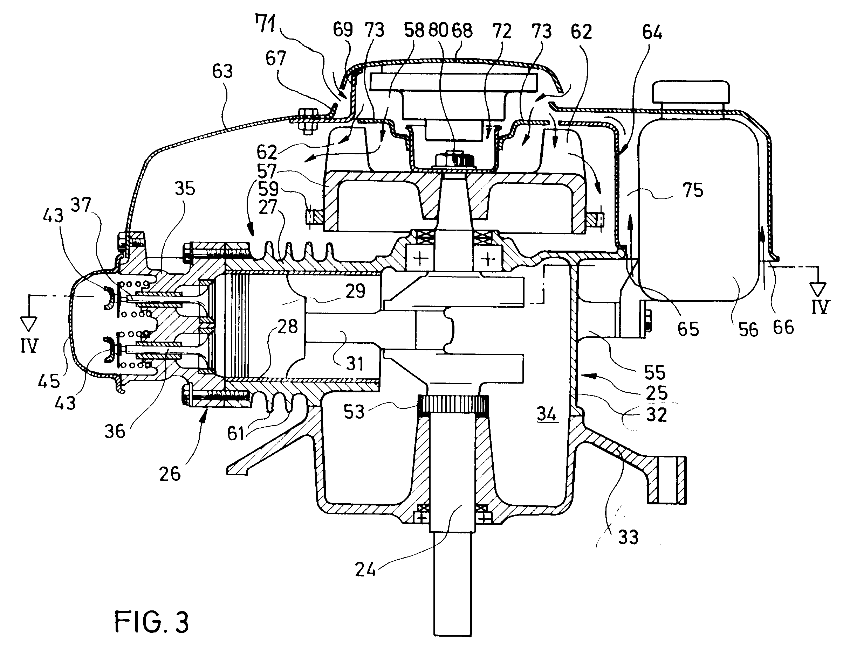

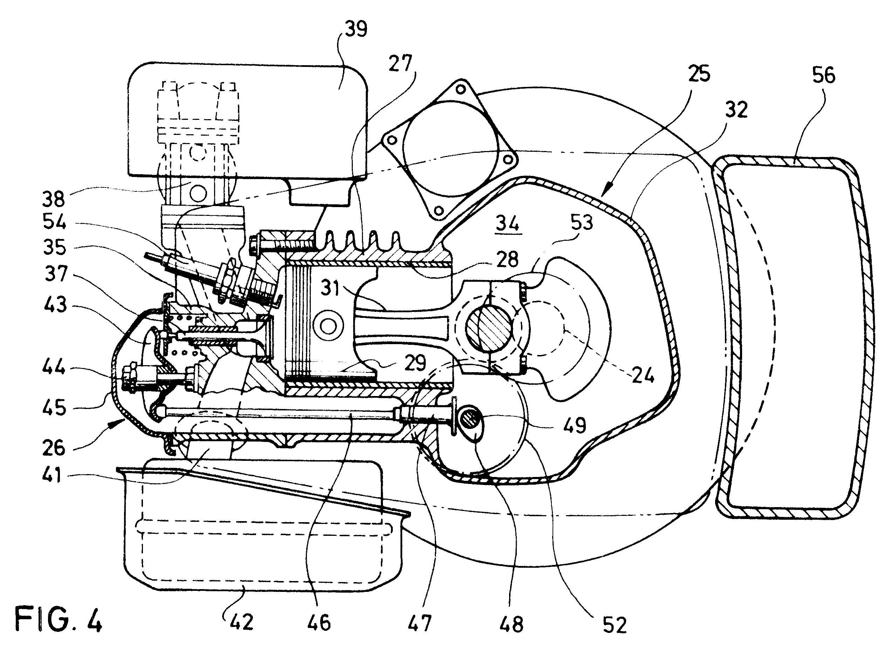

Referring now primarily to Figures 3 and 4, the engine 25 is, in the illustrated embodiment, of the single cylinder, four cycle, air cooled type and includes a cylinder assembly, indicated generally by the reference numeral 26. The cylinder assembly 26 is comprised of a cylinder block 27 that defines a generally horizontallly disposed cylinder bore 28. A piston 29 is supported for reciprocation within the cylinder bore 28 and is connected by means of a connecting rod 31 to a crankshaft 24 which, as aforenoted, comprises the shaft to which the cutter blade 23 is affixed.

The crankshaft 24 is rotatably journaled in a crankcase that is defined by a first generally downwardly facing cup shaped part 32 that is formed integrally with the cylinder block 27 and a mating lower piece 33. The pieces 32 and 33 define the crankcase chamber 34 which also provides a sump for lubricant, as is well known. The lower crankcase piece 33 provides a means by which the motor 25 may be affixed to the mower outer housing 12.

The cylinder assembly 26 further includes a cylinder head 35 that is affixed in a suitable manner to the cylinder block 27 and which forms a closure for the upper end of the cylinder bore 28. An intake valve 36 and an exhaust valve 37 are supported for reciprocation within the cylinder head 35 with the axes of reciprocation as defined by the stems of the valves 36 and 37 lying in a generally vertically disposed plane which is offset to one side of the axis of the cylinder bore 27. The intake valve 36 controls the flow of an intake charge through an intake passage which is formed in the cylinder head 35 and which communicates at its inlet end with a carburetor 38 that is disposed at one side of the cylinder head and rearwardly of the lawn mower 11 relative to the crankshaft axis. An air cleaner silencer assembly 39 is affixed to the carburetor 38 and supplies clean, silenced and filtered air to the carburetor 38.

The exhaust valve 37 controls the flow of exhaust gases through an exhaust passage formed in the cylinder head 35 to an inlet flange 41 of a muffler, indicated generally by the reference numeral 42. The muffler 42 silences the exhaust gases and discharges them to the atmosphere in a known manner. It should be noted that the muffler 42 is disposed to the rear end of the mower and is located at the side opposite to the carburetor 38 and air cleaner 39. As a result, these components will be positioned rearwardly of the main casing 12 so as to move the center of gravity of the assembly rearwardly for a reason to be described.

The valves 36 and 37 are operated by means of respective rocker arms 43 that are pivotally supported on the cylinder head 35 by pivot bolts 44. A rocker arm cover 45 is affixed to the cylinder head 35 and enclosed the valve operating mechanism. The rocker arms 43 are, in turn, pivoted by means of respective push rods 46 that extend along one side of the cylinder block 23 and which are engaged by tappets 47 at the ends opposite to the rocker arms 43. The tappets 47 are slidably supported within the crankcase chamber 34 and are engaged with respective lobes 48 of a camshaft 49. The camshaft 49 is rotatably journaled in the crankcase chamber 34 about an axis that extends parallel to the axis of the crankshaft 24. A timing gear 52 formed on the camshaft 49 meshes with a timing gear 53 formed on the crankshaft 24 so as to rotate the camshaft 49 at one half crankshaft speed, as is well known in this art.

The charge which is admitted to the combustion chamber of the engine through the intake valve 36 is fired by means of a spark plug 54 that is affixed to the cylinder head 35. The spark plug 54 is positioned at one side of the cylinder head away from the rocker arms 43 and toward the carburetor 38 as best shown in Figure 7. This location of the spark plug 54 places it in a position wherein the spark plug 54 may be conveniently accessed for servicing.

As may be best seen in this Figure, the spark plug 54 is positioned at a lower level than the height of the discharge chute H1 and lower than the top of the muffler H3, the top of the air cleaner 39 and the upper most portion of the engine H3. This keeps a low center of gravity while, at the same time, maintaining the heavier components of the engine rearwardly of the axis of rotation of the crankshaft 24. This rearward disposition of the center of gravity permits the mower to be easily steered by raising the front wheels 14 from the ground.

The cylinder block crankcase portion 32 is provided with a pair of forwardly extending lugs 55 to which a fuel tank 56 is affixed, as by bolts. The fuel tank 56 is positioned at the forward end of the mower 11 and is thus forwardly displaced from the muffler 42. However, the fuel tank 56 is positioned closely adjacent the crankcase cavity 34 so as to avoid any significant forward bias of the center of gravity. Fuel is supplied from the fuel tank 56 to the carburetor 38 in any suitable manner, as by gravity flow through a conduit (not shown).

A flywheel 57 is affixed to the upper end of the crankshaft 24 by means including a nut 58 that is received on a threaded end of the crankshaft 24. The flywheel 57 has a peripheral gear 59 that may be utilized in conjunction with an electric starter (not shown) or a recoil starter for starting of the engine in a known manner. In addition, the flywheel carries a magnet arrangement for operating a magneto generator (not shown) also in a known manner.

In accordance with the invention, the engine 25 is air cooled and to this end the horizontally extending cylinder block 27 is provided with circumferentially extending cooling fins 61. The flywheel 57 is formed with integral fan blades 62 for circulating cooling air across the engine and the fins 61. In order to provide a controlled path for this air flow, the flywheel 57 and at least a portion of the engine itself including the cylinder 27 is enclosed by a cowling means including a first cowling member 63 that is affixed to the engine via the cylinder head 35 through a plurality of threaded fasteners, not all of which appear in the drawings.

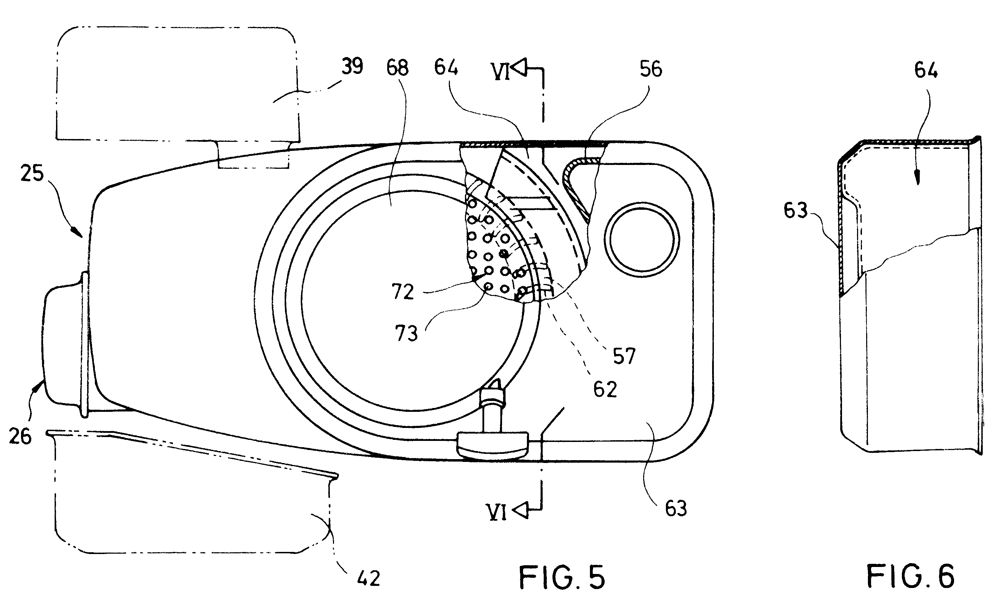

This cowling member 63 also extends across and encompasses the fuel tank 56 although the filler neck and closure cap for the fuel tank are exposed for facilitating filling. An internal baffle of arcuate shape, indicated generally by the reference numeral 64 is contained within the cowling member 63 and defines an arcuate path around the periphery of the fan blades 62 in the area adjacent the fuel tank 56 as best shown in Figure 5. There is provided an annular air inlet gap 65 between the lower peripheral edge of the baffle plate 63 and the fuel tank 56 and also a downwardly extending annular air inlet gap 66 around the forward end of the fuel tank 56 for drawing cooling air into the fan blades 62 as shown by the arrows in Figure 3.

The cowling member 63 is also provided with an upwardly extending flange 67 that defines a central opening over the flywheel 57. This opening is partially enclosed by a dome shape member 68 that is affixed to the cowl member 63 by means of a plurality of spaced brackets 69 so as to define an annular air inlet opening 71 through which cooling air may also be drawn. A cup shape member 72 is affixed to the upper end of the flywheel 57 radially inwardly of the fan blades 62 and carries an outwardly extending annular perforate screen 73. As seen in Figure 3, air may be drawn through the inlet openings 71 and passed downwardly through the openings in the screen 73 so as to flow across the fan blades in conjunction with the air drawn in through the inlet opening 65 and 66. The air is then driven downwardly across the engine and will exit through the opened lower face of the cowling member 63 and around the cylinder block 27 so as to ensure adequate cooling. In this way and because of the configuration as aforedescribed, it is ensured that there will be a good flow of cooling air and this cooling air is drawn primarily upwardly through the opening 65 and 66 in an area where there will be very few if any grass clippings. Furthermore, there is a vertically extending inlet channel 75 formed around these passages 65 and 66 which has sufficient height so that any grass clippings which may pass in this area will fall by gravity back onto the upper body of the mower where they can be easily removed. Any grass clippings which may inadvertently enter these channels will be trapped by the perforated plate 73 and hence cannot be lodged inside of the cowling 63.

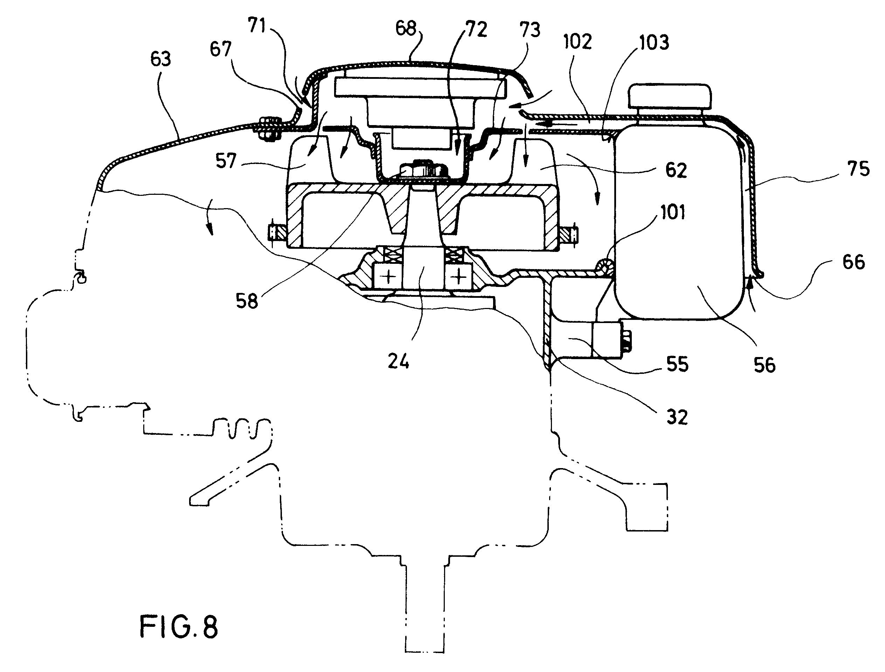

Figure 8 shows an embodiment of the invention which is generally similar to the embodiment of Figures 1 through 7. The only difference in this embodiment from the previously described embodiment is that there is not provided an annular baffle 64 in this embodiment. Rather, the engine crankcase portion 32 carries a resilient seal 101 that sealingly engages the fuel tank 56 so that no air will be drawn inwardly on the inner periphery of the fuel tank. A baffle plate 102 is carried by the cowling member 63 and sealingly engages the fuel tank 56 at its upper end, as at 103. Hence, in this embodiment, the air gap 66 and channel 75 provide the sole source of air for the cooling system from the downwardly facing portions.

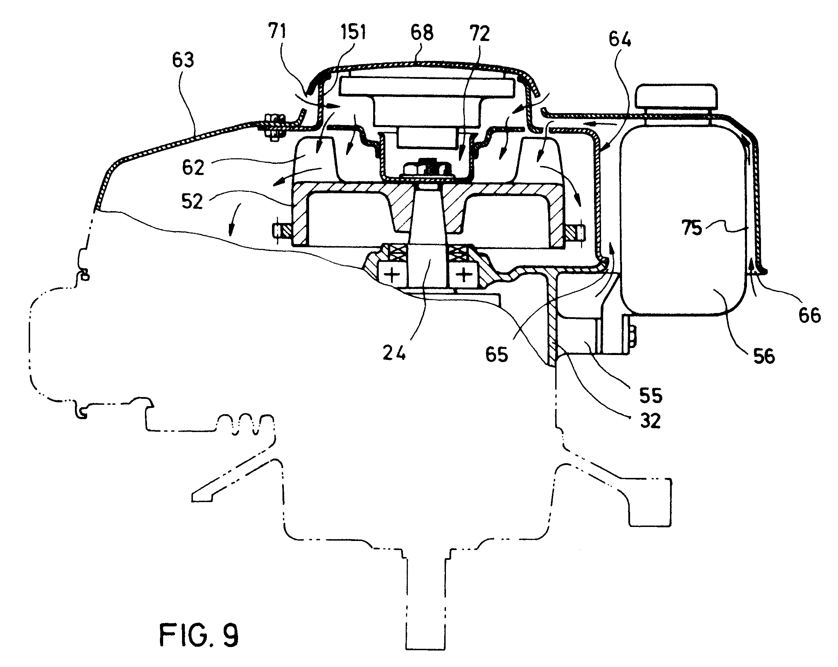

Figure 9 shows yet another embodiment of the invention which is generally similar to the embodiment of Figures 1 through 7. However, in this embodiment, the dome shape member 68 is affixed to the cowling member 63 by an interconnecting member that extends circumferentially around the dome shape member 63 and is provided with a perforate wall 151 so that any external air delivered through the channel 71 must pass through this perforate wall 151 to prevent the induction of grass clippings for foreign material into the air cooling system.

It should be readily apparent from the foregoing description that an extremely effective air cooling system is provided for a rotary type lawn mower and one which will ensure that grass clippings cannot be drawn into the air cooling system for the engine and further that the engine will be supplied with a more than adequate supply of cooling air. Also, the components of the engine are laid out in such a way as to ensure that the center of gravity is placed rearwardly of the rotational axis of the cutting blade and, accordingly, it will be quite easy to steer the lawn mower by raising the front wheels off of the ground.

## Claims

1. A rotary lawn mower (11) comprising:
an outer housing (12) defining a downwardly open cavity,
an air-cooled internal combustion engine (25), supported by said outer housing (12) above said cavity, said engine (25) having at least one cylinder having its axis extending horizontally and an output shaft (24), rotating about a vertically extending axis,
a cutting blade (23) supported within said cavity for rotation about a generally vertically extending axis (24) and driven by said engine,
a fan (73) driven by said output shaft (24) and lying above said cylinder,
cowling means including said fan and at least portions of said engine for directing the flow of cooling air circulated by said fan,
a first air inlet opening (65,66) for said cooling means to draw inlet air from an area below said fan (73),
rear wheels (15) provided at the rear end of the mower, front wheels (14), and a handle (19) connected to the mower housing (12),
a discharge chute (18) for discharging the cut grass from said housing,
**characterised in that**
said discharge chute (18) opens to the rear of the mower,
a cowling member (63) is provided, said cowling member having a central opening over the fly fan (73), which is partially enclosed by a dome shaped member (68), to define a second annular air inlet opening (71), through which cooling air also may be drawn,
said first air inlet opening to draw inlet air from an area below said fan is provided in front of the housing (12), and
this first inlet opening (65,66) and this second air inlet opening (71) are designed such that the air is drawn primarily upwardly through the first inlet opening (65,66).

2. A rotary lawn mower as set forth in claim 1 wherein the outer housing (12) has scroll shape.

3. A rotary lawn mower as set forth in claim 2 wherein the scroll shape defines the discharge chute (18) for the cut grass and wherein the engine is provided with a muffler (42) that is spaced vertically above the upper end of the discharge chute.

4. A rotary lawn mower as set forth in claims 2 or 3 wherein the engine (25) is provided with a carburetor (38) drawing air through an air cleaner (39) and wherein the housing defines the discharge chute (18) with the carburetor being positioned vertically above the discharge chute.

5. A rotary lawn mower as set forth in one of claims 1 to 4 wherein the cylinder (26) extends rearwardly from the axis of rotation of the cutting blade (23).

6. A rotary lawn mower as set forth in one of the claims 1 to 5 wherein the center of gravity of the lawn mower is disposed rearwardly of the rotational axis of the cutting blade (23) for facilitating steering of the mower by lifting the front wheels (14) from the ground.

## Patentansprüche

1. Ein Rotationsrasenmäher (11) umfaßt:
ein äußeres Gehäuse (12), das einen nach unten offenen Hohlraum begrenzt,
einen luftgekühlten Motor (25) mit innerer Verbrennung, der von dem genannten äußeren Gehäuse (12) oberhalb des genannten Hohlraums gehalten ist, wobei der genannte Motor (25) wenigstens einen Zylinder, dessen Achse sich horizontal erstreckt, und eine Abtriebswelle (24) aufweist, die sich um eine sich vertikal erstreckende Achse dreht,
ein Schneidmesser (23), das innerhalb des genannten Hohlraums zur Drehung um eine sich allgemein vertikal erstreckende Achse (24) gehalten und von dem genannten Motor angetrieben ist,
einen Ventilator (73), der von der genannten Abtriebswelle (24) angetrieben wird und oberhalb des genannten Zylinders liegt,
eine Verkleidungseinrichtung, die den genannten Ventilator und wenigstens Abschnitte des genannten Motors zum Lenken der Strömung kalter Luft einschließt, die die durch genannten Ventilator zirkuliert wird,
eine erste Lufteinlaßöffnung (65,66) für die genannte Verkleidungseinrichtung, um Einlaßluft von einem Bereich unterhalb des genannten Ventilators (73) einzuziehen,
Hinterräder (15), die an dem hinteren Ende des Mähers vorgesehen sind, Vorderräder (14) und ein Griff (19), der mit dem Mähergehäuse (12) verbunden ist,
eine Austragsrutsche (18) zum Austragen des geschnittenen Grases von dem genannten Gehäuse,
**dadurch gekennzeichnet, daß**
sich die genannte Austragsrutsche (18) zu dem hinteren Ende des Mähers öffnet,
ein Verkleidungsteil (63) vorgesehen ist, wobei das genannte Verkleidungsteil eine mittlere Öffnung über dem Schwungradventilator (73) hat, der teilweise von einem kuppelförmigen Teil (68) eingeschlossen ist, um eine zweite, ringförmige Lufteinlaßöffnung (71) zu begrenzen, durch die Kühlluft ebenfalls eingezogen werden,
die genannte erste Lufteinlaßöffnung, um Einlaßluft von einem Bereich unterhalb des genannten Ventilators einzuziehen, vor dem Gehäuse (12) vorgesehen ist, und
diese erste Einlaßöffnung (65,66) und diese zweite Lufteinlaßöffnung (71) so ausgelegt sind, daß die Luft hauptsächlich nach oben durch die erste Einlaßöffnung (65,66) eingezogen wird.

2. Ein Rotationsrasenmäher, wie in Anspruch 1 angegeben, in dem das äußere Gehäuse (12) eine Spiralform hat.

3. Ein Rotationsrasenmäher, wie in Anspruch 2 angegeben, in dem die Spiralform die Austragsrutsche (18) für das geschnittene Gras begrenzt, und in dem der Motor mit einem Schalldämpfer (42) versehen ist, der vertikal oberhalb des oberen Endes der Austragsrutsche beabstandet ist.

4. Ein Rotationsrasenmäher, wie in Anspruch 2 oder 3 angegeben, in dem der Motor (25) mit einem Vergaser (38) versehen ist, der Luft durch ein Luftfilter (38) einsaugt, und in den das Gehäuse die Austragsrutsche (18) begrenzt, wobei der Vergaser vertikal oberhalb der Austragsrutsche positioniert ist.

5. Ein Rotationsrasenmäher, wie in einem der Ansprüche 1 bis 4 angegeben, in dem sich der Zylinder (26) nach rückwärts von der Drehachse des Schneidmessers (23) erstreckt.

6. Ein Rotationsrasenmäher, wie in einem der Ansprüche 1 bis 5 angegeben, in dem der Schwerpunkt des Rasenmähers rückwärts der Drehachse des Schneidmessers (23) zum Erleichtern des Steuerns des Mähers durch Anheben der Vorderräder (14) von dem Boden angeordnet ist.

## Revendications

1. Tondeuse à gazon rotative (11) comprenant :
un carter extérieur (12) définissant une cavité ouverte vers le bas,
un moteur à combustion interne (25), refroidi par air, supporté par ledit carter extérieur (12) au-dessus de ladite cavité, ledit moteur (25) ayant au moins un cylindre dont l'axe s'étend horizontalement et un arbre de sortie (24), tournant autour d'un axe s'étendant verticalement,
unelame de coupe (23) supportée à l'intérieur de ladite cavité pour tourner autour d'un axe (24) s'étendant généralement verticalement, et entraîné par ledit moteur,
un ventilateur (73) entraîné par ledit arbre de sortie (24) et disposé au-dessus dudit cylindre,
des moyens de capotage comprenant ledit ventilateur et au moins certaines parties dudit moteur pour diriger l'écoulement d'air de refroidissement soufflé par ledit ventilateur,
un premier orifice d'entrée d'air (65,66) pour lesdits moyens de capotage pour aspirer l'air d'entrée venant d'une région située sous ledit ventilateur (73),
des roues arrière (15) placées à l'extrémité arrière de la tondeuse, des roues avant (14), et un guidon (19) relié au carter (12) de la tondeuse,
une goulotte de décharge (18) pour décharger l'herbe coupée dudit carter,
caractérisée en ce que
ladite goulotte de décharge (18) s'ouvre sur l'arrière de la tondeuse,
un élément de capotage (63) est présent, ledit élément de capotage ayant une ouverture centrale sur le rotor du ventilateur (73), qui est partiellement entourée par un élément (68) en forme de dôme, pour définir un second orifice d'entrée d'air annulaire (71), à travers lequel l'air de refroidissement peut être également aspiré,
ledit premier orifice d'entrée d'air pour aspirer l'air d'entrée d'une région située sous ledit ventilateur est placé sur le devant du carter(12), et
ce premier orifice d'entrée (65, 66) et ce second orifice d'entrée d'air (71) sont conçus de telle sorte que l'air est aspiré essentiellement vers le haut à travers le premier orifice d'entrée (65, 66).

2. Tondeuse à gazon rotative selon la revendication 1, dans laquelle le carter extérieur (12) a la forme d'une spirale.

3. Tondeuse à gazon rotative selon la revendication 2, dans laquelle la forme en spirale définit la goulotte de décharge (18) pour l'herbe coupée et dans laquelle le moteur est muni d'un silencieux (42) qui est espacé verticalement au-dessus de l'extrémité supérieure de la goulotte de décharge.

4. Tondeuse à gazon rotative selon la revendication 2 ou 3, dans laquelle le moteur (25) comprend un carburateur (38) qui aspire l'air à travers un filtre à air (39) et dans laquelle le carter définit la goulotte de décharge (18) avec le carburateur placé verticalement au-dessus de la goulotte de décharge.

5. Tondeuse à gazon rotative selon l'une des revendications 1 à 4, dans laquelle le cylindre (26) s'étend en arrière par rapport à l'axe de rotation de la lame de coupe (23).

6. Tondeuse à gazon rotative selon l'une des revendications 1 à 5, dans laquelle le centre de gravité de la tondeuse à gazon est situé en arrière de l'axe de rotation de la lame de coupe (23) pour faciliter le guidage de la tondeuse en soulevant les roues avant (14) du sol.
